# EUROPEAN PATENT APPLICATION

(11) **EP 4 738 396 A1**
(43) Date of publication of application: **06.05.2026**
(21) Application number: 25211017.6
(22) Date of filing: 24.10.2025
(51) Int. Cl.: H01C 7/102, C08L 83/04, H01C 7/12, H01H 85/00, C09D 183/04, C09D 183/06, C09D 183/08, H01H 85/38, H01C 7/02

(54) **ARC QUENCHING AND FLAME RETARDING COATING FOR ELECTRONIC DEVICES**

(30) Priority: 30.10.2024 US 202418931903
(71) Applicant: Littelfuse, Inc., Rosemont, Illinois 60018 (US)
(72) Inventor: Chen, Jianhua, Rosemont, 60018 (US); Tsang, Chun-Kwan, Rosemont, 60018 (US); Dietsch, Gordon T., Rosemont, 60018 (US)
(74) Representative: Arnold & Siedsma

(57) **Abstract**

A metal oxide varistor (MOV) device including a MOV chip, electrically conductive first and second electrodes disposed on opposite sides of the MOV chip, electrically conductive first and second leads connected to the first and second electrodes, respectively, and an arc mitigating, flame retarding coating covering the MOV chip, the first and second electrodes, and portions of the first and second leads, the arc mitigating, flame retarding coating comprising a silicone composition formed of a filler material suspended in a silicone resin, wherein the filler material includes one or more of melamine, guanidine, guanine, hydantoin, allantoin, urea, melamine-formaldehyde, melamine-cyanurate polymer, and boric acid.

## Description

### BACKGROUND

### Field

The present disclosure relates generally to the field of electronic devices. More specifically, the present disclosure relates to an arc-quenching, flame-retarding silicone composition for coating electronic devices that are prone to electrical arcing and/or combustion when subjected to extreme fault conditions.

### Description of Related Art

Various types of electronic devices may be prone to electrical arcing and/or combustion when subjected to overcurrent, overvoltage, or overtemperature conditions (collectively referred to herein as "fault conditions"). Such devices include metal oxide varistors (MOVs), thermally protected MOVs (TMOVs), fuses, positive temperature coefficient (PTC) devices (e.g., PTC fuses and PTC heaters), and the like.

In the case of MOV and PTC devices, a fault condition may cause the MOV element or PTC element in the device to overheat and combust, damaging the device and potentially damaging surrounding components. In the case of fuses and TMOVs, a fault condition may cause the fusible element in the device to melt or otherwise separate to interrupt the flow of electrical current through the device. When the fusible element separates, it is sometimes possible for an electrical arc to propagate between the separated portions of the fusible element (e.g., through residual, vaporized particulate between the separated portions of the fusible element). If not extinguished, the electrical arc may allow significant follow-on currents to flow through the device, resulting in damage to connected components despite the physical opening of the fusible element. Moreover, heat generated by an electrical arc can burn and/or rupture the body of the device, potentially causing damage to surrounding components. It is therefore desirable to extinguish an electrical arc as quickly as possible to prevent or mitigate any damage to connected and surrounding components that might result therefrom.

It is with respect to these and other considerations that the present improvements may be useful.

### SUMMARY

This Summary is provided to introduce a selection of concepts in a simplified form further described below in the Detailed Description. This Summary is not intended to identify key features or essential features of the claimed subject matter, nor is the summary intended as an aid in determining the scope of the claimed subject matter.

The present disclosure relates to an arc mitigating, flame retarding coating covering for an electronic device, the coating comprising a silicone composition formed of a filler material suspended in a silicone resin.

The filler material may include one or more of melamine, guanidine, guanine, hydantoin, allantoin, urea, melamine-formaldehyde, melamine-cyanurate polymer, and boric acid.

The filler material may comprise 3% to 70% by weight of the silicone composition.

On exposure to heat and flames, silicone in the composition decomposes, exposing the filler material in the coating, which in turn is burned and decomposes, whereby on decomposing the filler material undergoes an endothermic chemical reaction that absorbs heat and quells the flames.

The present disclosure also relates to an electronic device coated with the arc mitigating, flame retarding coating according to any of the preceding claims.

A metal oxide varistor (MOV) device in accordance with the present disclosure may include a MOV chip, electrically conductive first and second electrodes disposed on opposite sides of the MOV chip, electrically conductive first and second leads connected to the first and second electrodes, respectively, and an arc mitigating, flame retarding coating covering the MOV chip, the first and second electrodes, and portions of the first and second leads, the arc mitigating, flame retarding coating comprising a silicone composition formed of a filler material suspended in a silicone resin.

A thermally protected metal oxide varistor (TMOV) in accordance with the present disclosure may include a MOV chip, electrically conductive first and second electrodes disposed on opposite sides of the MOV chip, an electrically conductive first lead connected to the first electrode, an electrically conducive second lead connected to a dielectric barrier disposed on the second electrode, a thermal cutoff (TCO) element having a first end electrically connected to the second lead on the dielectric barrier and a second end electrically connected to the second electrode, and an arc mitigating, flame retarding coating covering a juncture of the TCO element and the second electrode, the arc mitigating, flame retarding coating comprising a silicone composition formed of a filler material suspended in a silicone resin.

A positive temperature coefficient (PTC) device in accordance with the present disclosure may include a PTC element comprising electrically conductive particles suspended in a non-conductive medium, electrically conductive first and second electrodes disposed on opposite sides of the PTC element, electrically conductive first and second leads connected to the first and second electrodes, respectively, and an arc mitigating, flame retarding coating covering the PTC element, the first and second electrodes, and portions of the first and second leads, the arc mitigating, flame retarding coating comprising a silicone composition formed of a filler material suspended in a silicone resin.

A fuse in accordance with the present disclosure may include a dielectric fuse body, first and second electrically conductive endcaps disposed on opposing ends of the fuse body, a fusible element extending through the fuse body and electrically connected to the first and second endcaps, and an arc mitigating, flame retarding coating covering the fuse body, the arc mitigating, flame retarding coating comprising a silicone composition formed of a filler material suspended in a silicone resin.

### BRIEF DESCRIPTION OF THE DRAWINGS

**FIGS. 1A-1C** are a series of perspective views illustrating a metal oxide varistor device in accordance with the present disclosure;
**FIGS. 2A-2C** are a series of perspective views illustrating a thermally protected metal oxide varistor device in accordance with the present disclosure;
**FIGS. 3A** and **3B** are a series of side views illustrating a positive coefficient temperature device in accordance with the present disclosure; and
**FIGS. 4A** and **4B** are a series of cross-sectional views illustrating a fuse in accordance with the present disclosure.

### DETAILED DESCRIPTION

Examples of electronic devices having an arc mitigating, flame retarding coatings in accordance with the present disclosure will now be described more fully hereinafter with reference to the accompanying drawings. The electronic devices and the arc mitigating, flame retarding coatings may, however, be embodied in many different forms and should not be construed as being limited to the embodiments set forth herein. Rather, these embodiments are provided so that this disclosure will convey certain exemplary aspects of the electronic devices and the arc mitigating, flame retarding coatings to those skilled in the art.

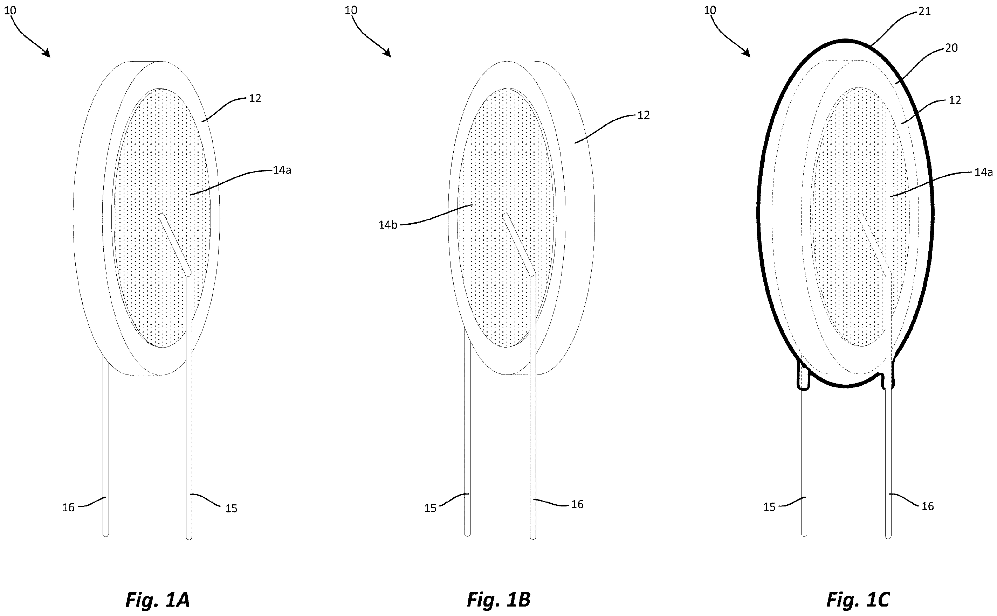

Referring to **FIGS. 1A** and **1B**, front and rear views of an exemplary embodiment of a MOV device 10 in accordance with the present disclosure are shown. The MOV device 10 may include a MOV chip 12 having first and second electrically conductive electrodes 14a, 14b disposed on opposite sides thereof. The MOV chip 12 may be formed of any MOV composition known in the art, such as multi crystalline zinc oxide ceramic. The present disclosure is not limited in this regard. The first and second electrodes 14a, 14b of the MOV device 10 may be formed of a metal having good electrical conductivity, such as aluminum, copper, silver, tin, etc. The present disclosure is not limited in this regard.

The MOV chip 12 and the electrodes 14a, 14b are depicted as being circular in shape, but this is not critical. It is contemplated that one or more of the MOV chip 12 and the electrodes 14a, 14b may have a different shape, such as rectangular, triangular, irregular, etc. without departing from the scope of the present disclosure.

The MOV device 10 may further include electrically conductive first and second leads 15, 16 connected to the first and second electrodes 14a, 14b, respectively, for facilitating electrical connection of the MOV device 10 within a circuit. In various non-limiting embodiments, the first and second leads 15, 16 may be electrically connected to the first and second electrodes 14a, 14b via soldering, welding, electrically conductive adhesive, etc.

Referring to **FIG. 1C****,** the MOV device 10 may be provided with an arc mitigating, flame retarding coating 20 (hereinafter "the coating 20") that covers the MOV chip 12, the first and second electrodes 14a, 14b, and portions of the first and second leads 15, 16. The coating 20 may be formed of a silicone composition formed of a filler material suspended in a silicone resin. In various embodiments, the filler material may include one or more of melamine, guanidine, guanine, hydantoin, allantoin, urea, melamine-formaldehyde, melamine-cyanurate polymer, boric acid, and derivatives or mixtures thereof, or other fillers that exhibit similar endothermic, arc quenching properties when burned as described below. The filler material may be distributed substantially evenly throughout the silicone resin and may account for 3-70% by weight of the silicone composition. The coating 20 may be applied to the underlying components of the MOV device 10 using any suitable method, including, but not limited to, dipping, jetting, molding, etc. The present disclosure is not limited in this regard. The MOV device 10 may further include a protective, dielectric shell 21 applied over the coating 20. In various embodiments, the shell 21 may be formed of epoxy and may be applied via dipping or the like. The present disclosure is not limited in this regard.

Upon the occurrence of an extreme fault condition (e.g., an extreme overvoltage condition) in the MOV device 10, MOV chip 12 may combust and produce a flame. Heat from the flame may burn and decompose the silicone in the coating 20. As the silicone decomposes, the filler material in the coating 20 may be exposed and may also be burned by the heat from the flame. As the filler material is burned and decomposes, it undergoes an endothermic chemical reaction that absorbs heat and quells the flame. Additionally, byproducts of the endothermic chemical reaction may produce water, which may further quell the flame. Thus, the filler material may, upon the occurrence of a fault condition in the MOV device 10, retard or extinguish the flame produced by combustion of the MOV chip 12, thereby protecting surrounding components from damage that might otherwise result if the flame were allowed to persist.

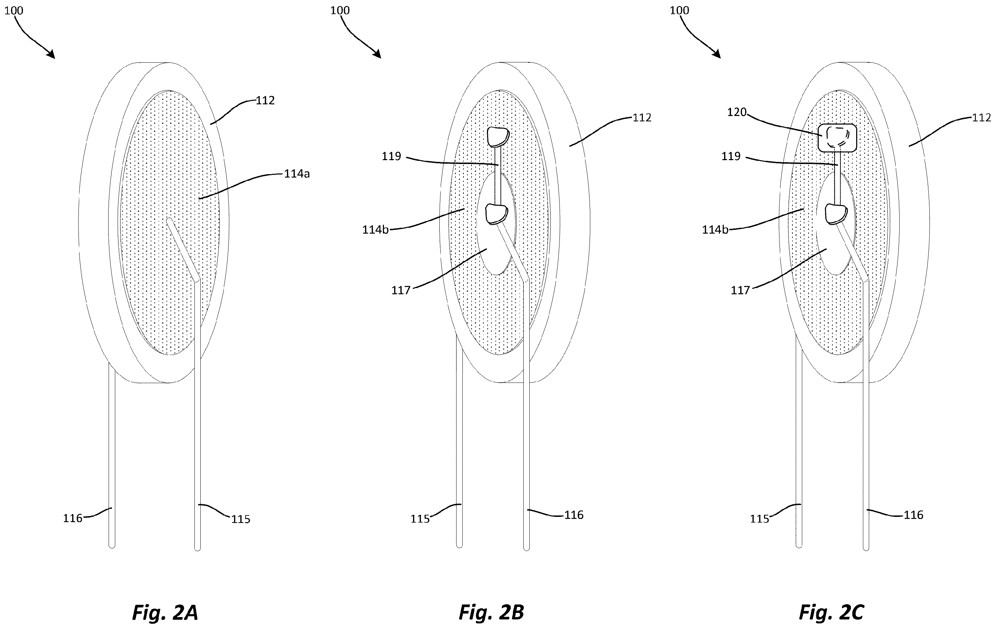

Referring to **FIGS. 2A** and **2B****,** front and rear views of an exemplary embodiment of a thermally protected metal oxide varistor device 100 (hereinafter "the TMOV device 100") in accordance with the present disclosure are shown. The TMOV device 100 may include a MOV chip 112 having first and second electrically conductive electrodes 114a, 114b disposed on opposite sides thereof. The MOV chip 112 may be formed of any MOV composition known in the art, such as zinc oxide granules embedded in ceramic. The present disclosure is not limited in this regard. The first and second electrodes 114a, 114b of the TMOV device 100 may be formed of a metal having good electrical conductivity, including, but not limited to, aluminum, copper, silver, tin, etc. The present disclosure is not limited in this regard.

The MOV chip 112 and the first and second electrodes 114a, 114b are depicted as being circular in shape, but this is not critical. It is contemplated that one or more of the MOV chip 112 and the first and second electrodes 114a, 114b may have a different shape, such as rectangular, triangular, irregular, etc. without departing from the scope of the present disclosure.

The TMOV device 100 may further include electrically conductive first and second leads 115, 116 for facilitating electrical connection of the TMOV device 100 within a circuit. The first lead 115 may be connected directly to the first electrode 114a on the front side of the MOV chip 112 via soldering, welding, electrically conductive adhesive, etc. The second lead 116 may be connected to a dielectric barrier 117 disposed on the rear side of the MOV chip 112 via soldering, adhesive, etc. The dielectric barrier 117 may be formed of ceramic or other dielectric material and may prevent direct electrical connection between the second lead 116 and the second electrode 114b. The TMOV device 100 may further include a thermal cutoff (TCO) element 119 having a first end electrically connected to the second lead 116 on the dielectric barrier 117 (e.g., via soldering) and a second end electrically connected to the second electrode 114b (e.g., via soldering). The TCO element 119 may be formed of an electrically conductive material and may be adapted to melt and separate upon reaching a predetermined temperature (e.g., 140 degrees Celsius - 240 degrees Celsius). During normal operation, the TMOV device will operate in the manner of a normal MOV device. However, upon the occurrence of an overtemperature condition in the TMOV device 100, the TCO element 119 will melt, thereby arresting current flowing through the TMOV device 100 and preventing further heating that could ignite the TMOV device 100 and damage surrounding components.

Referring to **FIG. 2C****,** the TMOV device 100 may be provided with an arc mitigating, flame retarding coating 120 (hereinafter "the coating 120") that covers the juncture of the TCO element 119 and the second electrode 114b (e.g., covering the solder connection between the TCO element 119 and the second electrode 114b). The coating 120 may be formed of a silicone composition formed of a filler material suspended in a silicone resin. In various embodiments, the filler material may include one or more of melamine, guanidine, guanine, hydantoin, allantoin, urea, melamine-formaldehyde, melamine-cyanurate polymer, boric acid, and derivatives or mixtures thereof, or other fillers that exhibit similar endothermic, arc quenching properties when burned as described below. The filler material may be distributed substantially evenly throughout the silicone resin and may account for 3-70% by weight of the silicone composition. The coating 120 may be applied to the underlying components of the TMOV device 100 using any suitable method, including, but not limited to jetting, dispensing, printing, etc. The present disclosure is not limited in this regard.

Though not pictured, the TMOV device 100 may further include a coating similar to the above-described coating 20, wherein such coating may cover the MOV chip 112, the first and second electrodes 114a, 114b, the dielectric barrier 117, the TCO element 119, the coating 120, and portions of the first and second leads 115, 116. Such coating may be formed of the silicone composition described above (with or without a protective shell similar to the shell 21 described above). Alternatively, such coating may be formed of a traditional dielectric, polymer coating that will be familiar to those of skill in the art.

Upon the occurrence of a fault condition (e.g., an overtemperature condition) in the TMOV device 100, the TCO element 119 may melt and separate, and an electrical arc may propagate across the gap left between the separated TCO element 119 and the second electrode 114a. Heat from the electrical arc may burn and decompose the silicone in the coating 120. As the silicone decomposes, the filler material in the coating 120 may be exposed and may also be burned by the heat from the electrical arc. As the filler material is burned and decomposes, it undergoes an endothermic chemical reaction that absorbs heat. The electrical arc is thereby rapidly cooled. Furthermore, depending on the specific arc filler material that is used in the coating 120, certain byproducts of the endothermic chemical reaction may be nonconductive gases (e.g., ammonia) that may hinder the ability of the electrical arc to persist. Still further, other byproducts of the endothermic chemical reaction may produce water, which may further cool the electrical arc. Thus, the filler material may, upon the occurrence of a fault condition in the TMOV device 100, absorb heat, release gases that are unfavorable to sustaining an electrical arc, and produce water which may further cool the electrical arc, all of which may contribute to rapid arc quenching. Components that are connected to the TMOV device 100 and/or that are located in the proximity of the TMOV device 100 are thereby protected from damage that might otherwise result if the electrical arc were allowed to persist.

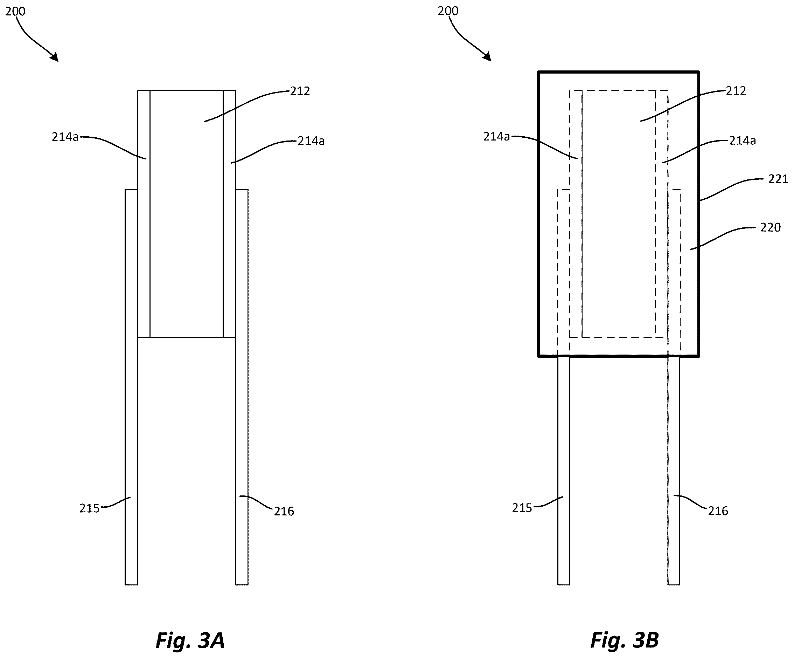

Referring to **FIG. 3A**, a side view of an exemplary embodiment of a positive temperature coefficient (PTC) device 200 in accordance with the present disclosure are shown. In various embodiments, the PTC device 200 may be a PTC fuse or a PTC heater. The present disclosure is not limited in this regard. The PTC device 200 may include a PTC element 212 having first and second electrically conductive electrodes 214a, 214b disposed on opposite sides thereof. The PTC element 212 may be formed of any type of PTC material composed of electrically conductive particles suspended in a non-conductive medium (e.g., polymeric PTC material, ceramic PTC material, etc.) and formulated to have an electrical resistance that increases as the temperature of the PTC element 212 increases. Particularly, the PTC element 212 may have a predetermined "trip temperature" above which the electrical resistance of the PTC element 212 rapidly and drastically increases (e.g., in a nonlinear fashion) in order to substantially arrest electrical current passing therethrough. The first and second electrodes 214a, 114b of the PTC device 200 may be formed of a metal having good electrical conductivity, such as aluminum, copper, silver, tin, etc. The present disclosure is not limited in this regard.

The PTC device 200 may further include electrically conductive first and second leads 215, 216 connected to the first and second electrodes 214a, 214b, respectively, for facilitating electrical connection of the PTC device 200 within a circuit. In various non-limiting embodiments, the first and second leads 215, 216 may be electrically connected to the first and second electrodes 214a, 214b via soldering, welding, electrically conductive adhesive, etc.

Referring to **FIG. 3B****,** the PTC device 200 may be provided with an arc mitigating, flame retarding coating 220 (hereinafter "the coating 220") that covers the PTC element 212, the first and second electrodes 214a, 214b, and portions of the first and second leads 215, 216. The coating 220 may be formed of a silicone composition formed of a filler material suspended in a silicone resin. In various embodiments, the filler material may include one or more of melamine, guanidine, guanine, hydantoin, allantoin, urea, melamine-formaldehyde, melamine-cyanurate polymer, boric acid, and derivatives or mixtures thereof, or other fillers that exhibit similar endothermic, arc quenching properties when burned as described below. The filler material may be distributed substantially evenly throughout the silicone resin and may account for 3-70% by weight of the silicone composition. The coating 220 may be applied to the underlying components of the PTC device 200 using any suitable method, including, but not limited to, dipping, jetting, molding, etc. The present disclosure is not limited in this regard. The PTC device 200 may further include a protective, dielectric shell 221 applied over the coating 220. In various embodiments, the shell 221 may be formed of epoxy and may be applied via dipping or the like. The present disclosure is not limited in this regard.

Upon the occurrence of an extreme fault condition (e.g., an extreme overcurrent condition) in the PTC device 200, the PTC element 212 may combust and produce a flame. Heat from the flame may burn and decompose the silicone in the coating 220. As the silicone decomposes, the filler material in the coating 220 may be exposed and may also be burned by the heat from the flame. As the filler material is burned and decomposes, it undergoes an endothermic chemical reaction that absorbs heat and quells the flame. Additionally, byproducts of the endothermic chemical reaction may produce water, which may further quell the flame. Thus, the filler material may, upon the occurrence of a fault condition in the PTC device 200, retard or extinguish the flame produced by combustion of the PTC element 212, thereby protecting surrounding components from damage that might otherwise result if the flame were allowed to persist.

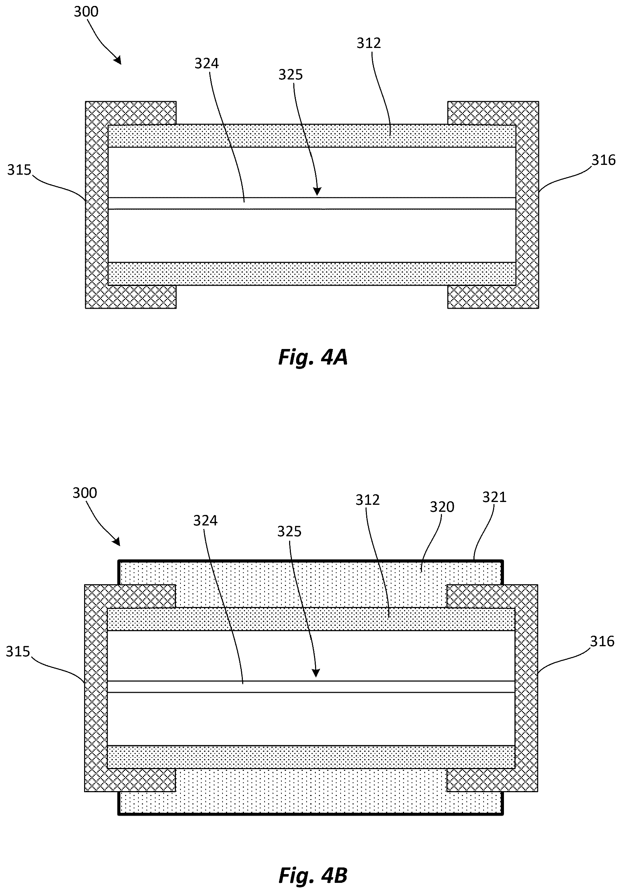

Referring to **FIG. 4A****,** a cross sectional side view of an exemplary embodiment of a fuse 300 in accordance with the present disclosure are shown. In various embodiments, the fuse 300 may be a cartridge fuse having a tubular, dielectric fuse body 312. The present disclosure is not limited in this regard. In various alternative embodiments, the fuse 300 may be a surface mount fuse or other type of fuse having a fusible element extending through a generally hollow fuse body. The fuse body 312 may be formed of an electrically insulating and preferably heat resistant material. Examples of such materials include, but are not limited to, ceramic, glass, and glass fiber-filled melamine-formaldehyde resin.

First and second electrically conductive endcaps 315, 316 may be disposed on opposing ends of the fuse body 312 and may be adapted to facilitate electrical connection of the fuse 310 within a circuit. A fusible element 324 may extend through the hollow interior of the fuse body 312 and may be connected to the first and second endcaps 315, 316 in electrical communication therewith, such as by solder. The first and second endcaps 315, 316 may be formed of an electrically conductive material, including, but not limited to, copper or one of its alloys, and may be plated with nickel or other conductive, corrosion resistant coatings. The fusible element 324 may be formed of an electrically conductive material, including, but not limited to, tin or copper, and may be configured to melt and separate upon the occurrence of a predetermined fault condition, such as an overcurrent condition in which an amount of current exceeding a predefined maximum value flows through the fusible element 324. This maximum value is commonly referred to as the "rating" of the fuse 300.

The fusible element 324 may be any type of fusible element suitable for a desired application, including, but not limited to, a wire, a corrugated strip, a wire wound about an insulating core, etc. In various embodiments, a central portion 325 of the fusible element 324 may be thinned, narrowed, perforated, or otherwise weakened relative to other portions of the fusible element 324 to ensure that the fusible element 324 separates at the central portion 325. The present disclosure is not limited in this regard.

Referring to **FIG. 4B****,** the fuse 300 may be provided with an arc mitigating, flame retarding coating 320 (hereinafter "the coating 320") that covers the fuse body 312. The coating 320 may be formed of a silicone composition formed of a filler material suspended in a silicone resin. In various embodiments, the filler material may include one or more of melamine, guanidine, guanine, hydantoin, allantoin, urea, melamine-formaldehyde, melamine-cyanurate polymer, boric acid, and derivatives or mixtures thereof, or other fillers that exhibit similar endothermic, arc quenching properties when burned as described below. The filler material may be distributed substantially evenly throughout the silicone resin and may account for 3-70% by weight of the silicone composition. The coating 320 may be applied to the underlying components of the fuse 300 using any suitable method, including, but not limited to, dipping, jetting, molding, etc. The present disclosure is not limited in this regard. The fuse 300 may further include a protective, dielectric shell 321 applied over the coating 320. In various embodiments, the shell 321 may be formed of epoxy and may be applied via jetting, dispensing, or the like. In various embodiments, the shell 321 may be entirely omitted. The present disclosure is not limited in this regard.

Upon the occurrence of a fault condition (e.g., an overcurrent condition) in the fuse 300, the central portion 325 of the fusible element 324 may melt and separate, and an electrical arc may propagate across the gap left between the separated portions of the fusible element 324. In extreme cases, the electrical arc may cause the fuse body 312 to combust and produce a flame. Heat from the flame may burn and decompose the silicone in the coating 320. As the silicone decomposes, the filler material in the coating 320 may be exposed and may also be burned by the heat from the flame. As the filler material is burned and decomposes, it undergoes an endothermic chemical reaction that absorbs heat and quells the flame. Additionally, byproducts of the endothermic chemical reaction may produce water, which may further quell the flame. Thus, the filler material may, upon the occurrence of a fault condition in the fuse 300, retard or extinguish the flame produced by combustion of the fuse body 312, thereby protecting surrounding components from damage that might otherwise result if the flame were allowed to persist.

As used herein, an element or step recited in the singular and proceeded with the word "a" or "an" should be understood as not excluding plural elements or steps, unless such exclusion is explicitly recited. Furthermore, references to "one embodiment" of the present disclosure are not intended to be interpreted as excluding the existence of additional embodiments that also incorporate the recited features.

While the present disclosure makes reference to certain embodiments, numerous modifications, alterations and changes to the described embodiments are possible without departing from the sphere and scope of the present disclosure, as defined in the appended claim(s). Accordingly, it is intended that the present disclosure not be limited to the described embodiments, but that it has the full scope defined by the language of the following claims, and equivalents thereof.

## Claims

1. An arc mitigating, flame retarding coating covering for an electronic device, the coating comprising a silicone composition formed of a filler material suspended in a silicone resin.

2. The coating of claim 1, wherein the filler material includes one or more of melamine, guanidine, guanine, hydantoin, allantoin, urea, melamine-formaldehyde, melamine-cyanurate polymer, and boric acid.

3. The coating of claim 1 or 2, wherein the filler material comprises 3% to 70% by weight of the silicone composition.

4. The coating of any of the preceding claims, whereby on exposure to heat and flames, silicone in the composition decomposes, exposing the filler material in the coating, which in turn is burned and decomposes, whereby on decomposing the filler material undergoes an endothermic chemical reaction that absorbs heat and quells the flames.

5. An electronic device coated with an arc mitigating, flame retarding coating according to any of the preceding claims.

6. The electronic device according claim 5, being one of a metal oxide varistor (MOV), a thermally protected MOV (TMOV), a fuse, a positive temperature coefficient (PTC) fuse or a PTC heater.

7. The electronic device of claim 6 being a metal oxide varistor (MOV) device comprising:
a MOV chip;
electrically conductive first and second electrodes disposed on opposite sides of the MOV chip; and
electrically conductive first and second leads connected to the first and second electrodes, respectively.

8. The electronic device of claim 6 being a thermally protected metal oxide varistor (TMOV) device comprising:
a MOV chip;
electrically conductive first and second electrodes disposed on opposite sides of the MOV chip;
an electrically conductive first lead connected to the first electrode;
an electrically conducive second lead connected to a dielectric barrier disposed on the second electrode; and
a thermal cutoff (TCO) element having a first end electrically connected to the second lead on the dielectric barrier and a second end electrically connected to the second electrode; whereby the arc mitigating, flame retarding coating covers a juncture of the TCO element and the second electrode.

9. The electronic device of claim 6 being a positive temperature coefficient (PTC) device comprising:
a PTC element comprising electrically conductive particles suspended in a non-conductive medium;
electrically conductive first and second electrodes disposed on opposite sides of the PTC element;
electrically conductive first and second leads connected to the first and second electrodes, respectively; whereby the arc mitigating, flame retarding coating covering the PTC element, the first and second electrodes, and portions of the first and second leads.

10. The PTC device of claim 9 being a heater or a fuse.

11. The electronic device of claim 6 being a fuse comprising a dielectric fuse body; first and second electrically conductive endcaps disposed on opposing ends of the fuse body; a fusible element extending through the fuse body and electrically connected to the first and second endcaps; whereby the arc mitigating, flame retarding coating covers the fuse body.

12. The electronic device of any of the preceding claims, further comprising a protective, dielectric shell applied over the arc mitigating, flame retarding coating.

13. The electronic device of claim 12, wherein the protective, dielectric shell is formed of epoxy.

14. Use of a coating according to any of the claims 1-4 for protecting an electronic device against arcing.

15. Process for providing an electronic device according claim 5, comprising the step of coating the device with a coating according to any of the claims 1-4.
